(19) Europäisches Patentamt / European Patent Office / Office européen des brevets

(11) **EP 2 808 510 B1**

(12) # FASCICULE DE BREVET EUROPEEN

(45) Date de publication et mention
de la délivrance du brevet:
**04.07.2018 Bulletin 2018/27**

(21) Numéro de dépôt: **14305762.8**

(22) Date de dépôt: **23.05.2014**

(51) Int Cl.:
*F01N 3/20* *(2006.01)*      *B01D 53/94* *(2006.01)*
*F01N 3/10* *(2006.01)*      *F01N 3/021* *(2006.01)*
*F01N 13/02* *(2010.01)*      *F01N 5/04* *(2006.01)*

(54) **PROCÉDÉ ET SYSTÈME DE CONTRÔLE DE LA QUALITÉ D'UN AGENT DE RÉDUCTION CATALYTIQUE SÉLECTIVE D'OXYDES D'AZOTE, INJECTÉ DANS UNE LIGNE D'ÉCHAPPEMENT D'UN VÉHICULE AUTOMOBILE**

QUALITÄTSKONTROLLVERFAHREN UND -SYSTEM EINES SELEKTIVEN KATALYTISCHEN REDUKTIONSMITTELS VON STICKOXIDEN, DAS IN DIE AUSPUFFANLAGE EINES KRAFTFAHRZEUGS EINGESPRITZT WIRD

METHOD AND SYSTEM FOR CONTROLLING THE QUALITY OF AN AGENT FOR SELECTIVE CATALYTIC REDUCTION OF NITROGEN OXIDES, INJECTED INTO AN EXHAUST LINE OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.05.2013 FR 1354836**

(43) Date de publication de la demande:
**03.12.2014 Bulletin 2014/49**

(73) Titulaire: **Renault S.A.S.**
**92100 Boulogne-Billancourt (FR)**

(72) Inventeurs:
• **Gerard, DAVID**
**75008 PARIS (FR)**
• **Rampanarivo, Fano**
**92160 ANTONY (FR)**
• **Emery, Pascal**
**91120 PALAISEAU (FR)**

(56) Documents cités:
**EP-A1- 2 133 524**      **WO-A1-2007/037730**
**WO-A1-2008/043928**      **US-A1- 2009 266 058**

EP 2 808 510 B1

**Description**

L'invention concerne un procédé et un système de contrôle de la qualité d'un agent dépolluant pour gaz d'échappement d'un moteur, injecté dans une ligne d'échappement d'un véhicule automobile, plus précisément un agent de réduction catalytique sélective destiné à réduire les émissions d'oxydes d'azote du moteur.

Les normes européennes d'émission, par exemple les normes dites « normes Euro 6 », fixent des limites maximales de rejets polluants pour les véhicules automobiles, dans le but de réduire la pollution atmosphérique due au transport routier. Ces normes antipollution sont de plus en plus sévères et s'appliquent notamment aux véhicules neufs. Les oxydes d'azote, souvent désignés par le terme générique « $NO_x$ », font partie des polluants concernés par ces normes. Les $NO_x$ sont émis en grande quantité par les moteurs diesel, qui fonctionnent en mélange pauvre, ainsi que, dans une plus faible mesure, par les moteurs à essence ou par les moteurs fonctionnant au GNL/GPL.

Pour réduire les oxydes d'azote $NO_x$, la technologie SCR (*Selective Catalytic Reduction* en anglais), ou RCS (*Réduction Catalytique Sélective* en français), est notamment utilisée. Son principe consiste à mettre en oeuvre, à l'intérieur d'un dispositif de traitement dit « dispositif SCR » une réduction qui transforme les $NO_x$ en azote $N_2$ et en vapeur d'eau. Cette conversion est obtenue par injection, dans la ligne d'échappement du véhicule automobile, d'un agent de réduction, ou agent réducteur. Cet agent est par exemple une solution aqueuse d'urée. On connaît notamment une solution de ce type, distribuée sous le nom commercial AdBlue©, pour une utilisation en tant qu'agent réducteur dans le processus de réduction catalytique sélective.

L'implantation de la technologie SCR dans un véhicule nécessite l'installation d'un réservoir d'agent réducteur, d'un injecteur d'agent réducteur, dispositif SCR et d'au moins une sonde à $NO_x$ à la sortie du dispositif SCR pour un contrôle en boucle de la quantité d'agent réducteur injectée. Un dispositif de pilotage commande le bon fonctionnement de ces différents éléments. Le réservoir d'agent réducteur doit être régulièrement approvisionné en agent réducteur. L'entrée de ce réservoir se situe généralement à côté de celle du réservoir de carburant. L'opération de remplissage du réservoir d'agent réducteur peut être réalisée soit par l'utilisateur du véhicule, soit par un garagiste.

Afin de vérifier si le produit injecté est bien l'agent réducteur normalement préconisé par le constructeur du véhicule, par exemple de l'AdBlue, et non pas un produit de substitution moins coûteux mais aussi moins efficace, voire incapable de réduire les $NO_x$, un détecteur de la qualité de l'agent réducteur est généralement installé sur le véhicule de manière à contrôler certaines caractéristiques chimiques du produit.

Un tel détecteur présente cependant divers inconvénients. D'une part, il ne garantit pas une détection parfaite. En effet, certains produits de substitution injectés peuvent avoir des caractéristiques chimiques très proches de celles de l'urée ou de l'AdBlue©, ce qui les rend indétectables par le détecteur. L'eau salée en est un exemple. D'autre part, l'implantation d'un tel détecteur est soumise à des contraintes d'encombrement, de coût et de maintenance.

Le document WO2007/037730 décrit un procédé de diagnostic pour identifier si la cause d'un taux élevé de NOx dans une ligne d'échappement est un dysfonctionnement du catalyseur SCR (désactivé) ou du système de dosage de l'agent de réduction (encrassé), selon que la quantité de NOx évacuée suite à une augmentation du débit d'agent de réduction injecté augmente ou diminue.

Le document EP2133524 décrit un procédé de détection d'une saturation de la quantité d'absorption d'ammoniac dans un catalyseur SCR d'une ligne d'échappement d'un véhicule automobile.

Le document WO2008/043928 décrit un procédé de contrôle de la quantité d'urée injectée dans un dispositif SCR d'une ligne d'échappement d'un véhicule automobile visant à déterminer une quantité optimale d'urée injectée.

Le document US2009/266058 décrit un procédé d'ajustement de la quantité d'agent de réduction injectée dans un catalyseur SCR d'une ligne d'échappement d'un véhicule automobile.

Aucun de ces documents ne vise à contrôler la qualité de l'agent de réduction injecté dans une ligne d'échappement d'un véhicule automobile.

La présente invention vient améliorer la situation.

A cet effet, l'invention concerne un procédé de contrôle de la qualité d'un agent de réduction catalytique sélective d'oxydes d'azote, injecté dans une ligne d'échappement d'un véhicule automobile, comprenant les étapes de la revendication 1 :

- injection d'une quantité déterminée de l'agent de réduction dans la ligne d'échappement ;
- mesure d'une variation de la quantité d'oxydes d'azote évacuée en réponse à l'injection ;
- comparaison de la variation mesurée et d'une variation attendue.

Grâce à l'invention, le détecteur d'agent réducteur connu de l'état de la technique est supprimé, et la qualité de l'agent réducteur injecté dans la ligne d'échappement est contrôlée par une simple mesure de la variation de la quantité de $NO_x$ à la sortie du dispositif SCR en réponse à une injection de l'agent réducteur. En d'autres termes, on teste l'efficacité de l'agent réducteur, c'est-à-dire sa capacité à réduire les $NO_x$ émis par le moteur. On soulignera que cette mesure peut être réalisée à l'aide d'une sonde à $NO_x$ existante, c'est-à-dire que le procédé selon l'invention ne nécessite pas de capteur supplémentaire. Ladite étape d'injection d'une quantité déterminée de l'agent de réduction est déclenchée sur détection d'un point de fonctionnement prédéfini du véhicule automobile. Il est prévu, durant le fonctionnement du véhicule automobile, une étape de détection d'un point de fonctionnement parmi un ensemble de points de fonctionnement préenregistrés et associés en mémoire à une variation étalon d'oxydes d'azote en réponse à une injection d'une quantité déterminée d'agent de réduction, et on détermine ladite variation attendue à partir de la variation étalon associée au point de fonctionnement détecté.

Lors d'une étape préalable de configuration, un ensemble de points de fonctionnement du moteur sont sélectionnés. Chacun de ces points de fonctionnement est associé en mémoire à une valeur étalon de variation des $NO_x$ dans les gaz d'échappement en réponse à l'injection d'une quantité donnée d'agent réducteur. Ces valeurs étalon de variation sont destinées à être utilisées pour déterminer des valeurs attendues de variation pour des points de fonctionnement préenregistrés détectés pendant le fonctionnement du moteur du véhicule.

Dans un mode de réalisation particulier, ledit point de fonctionnement appartient à une zone de fonctionnement du véhicule automobile dépourvue de contraintes réglementaires.

L'opération de contrôle de qualité est ainsi réalisée pour un point de fonctionnement du moteur non soumis à des contraintes réglementaires antipollution, ce qui permet de réaliser le contrôle de façon plus souple.

Avantageusement encore, l'étape d'injection d'une quantité déterminée de l'agent de réduction est précédée d'une étape d'arrêt de l'injection de l'agent de réduction et d'une étape de mesure de la quantité d'oxydes d'azote évacuée en réponse à l'arrêt d'injection de l'agent de réduction.

L'arrêt momentané de l'injection permet ensuite de détecter de façon fiable et précise l'impact de l'injection d'une quantité déterminée d'agent réducteur (c'est-à-dire la variation de la quantité d'oxydes d'azote dans les gaz d'échappement).

Dans un mode de réalisation particulier, on détermine la variation attendue en corrigeant la variation étalon préenregistrée par un facteur de vieillissement.

Avantageusement, on détermine la variation attendue en corrigeant la variation étalon préenregistrée par un coefficient d'efficacité fonction de la température de fonctionnement.

On prend ainsi en compte le vieillissement du dispositif de réduction catalytique sélective et son efficacité en fonction de la température de fonctionnement.

L'invention concerne aussi un système de contrôle de la qualité d'un agent de réduction catalytique d'oxydes d'azote, injecté dans une ligne d'échappement d'un véhicule automobile, comprenant les éléments de la revendication 6 :

- un dispositif d'injection de l'agent de réduction dans la ligne d'échappement ;
- un dispositif de mesure d'une quantité d'oxydes d'azote évacuée en aval d'une réduction catalytique ;
- un module de commande adapté pour commander une injection d'une quantité déterminée de l'agent de réduction, calculer une variation de la quantité d'oxydes d'azote évacuée en aval de la réduction catalytique, en réponse à l'injection, à partir de valeurs mesurées, et comparer la variation mesurée et une variation attendue préenregistrée.

L'invention concerne encore un module logiciel pour un système de contrôle de la qualité d'un agent de réduction catalytique d'oxydes d'azote, injecté dans une ligne d'échappement d'un véhicule automobile, comprenant les éléments de la revendication 7: des instructions logicielles pour commander une injection d'une quantité déterminée de l'agent de réduction, calculer une variation de la quantité d'oxydes d'azote évacuée en aval d'une réduction catalytique, en réponse à l'injection, à partir de valeurs mesurées, et comparer la variation mesurée et une variation attendue préenregistrée, lorsque ledit module logiciel est exécuté par un processeur.

L'invention sera mieux comprise à l'aide de la description suivante de deux modes de réalisation particuliers du procédé et du système de contrôle de la qualité d'un agent de réduction selon l'invention, en référence aux dessins annexés sur lesquels :

- la figure 1 représente un premier exemple d'un système de contrôle ;
- la figure 2 représente un deuxième exemple d'un système de contrôle ;
- la figure 3 représente des courbes de fonctionnement, réglementé et maximal, du véhicule automobile ;
- la figure 4 représente une courbe d'efficacité de la réduction catalytique sélective (*SCR - Selective Catalytic Reduction* - en anglais) en fonction de la température ;
- la figure 5 représente un organigramme des étapes du procédé de contrôle de qualité, selon un mode de réalisation particulier de l'invention.

Le système de contrôle de l'invention permet de contrôler la qualité d'un agent réducteur d'oxydes d'azote pour gaz d'échappement, injecté dans une ligne d'échappement d'un véhicule automobile, par exemple un véhicule équipé d'un moteur diesel.

Dans l'exemple particulier décrit, l'agent réducteur est destiné à transformer les oxydes d'azote, ou $NO_x$, qui

sont l'un des constituant des gaz d'échappement, en azote $N_2$ et en vapeur d'eau. Il contient ici de l'urée. Par exemple, il peut s'agir du produit distribué sous la marque commerciale AdBlue©, qui est constitué d'une solution aqueuse d'urée à 32,5%.

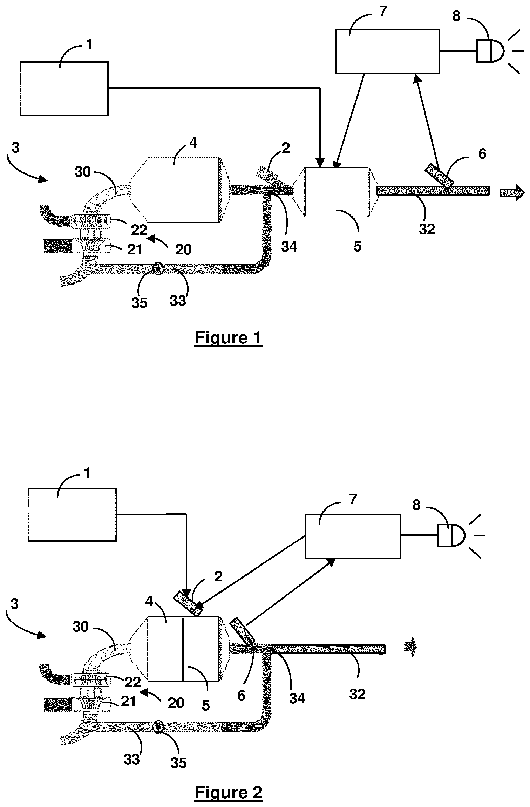

En référence à la figure 1, le système de contrôle selon un premier exemple de réalisation, comprend :

- un réservoir d'agent réducteur 1 ;
- un injecteur d'agent réducteur 2 ;
- une ligne d'échappement 3 d'un véhicule automobile (non représenté) équipé d'un moteur (non représenté) qui est ici du type suralimenté, c'est-à-dire associé à un turbocompresseur 20 comportant un compresseur 21 et une turbine 22 représentés sur la figure 1 ;
- un dispositif de traitement 4 des émissions polluantes du moteur ;
- un dispositif SCR de réduction catalytique sélective 5 ;
- une sonde à $NO_x$ 6 ;
- et un calculateur 7 du moteur.

Le réservoir 1 contient l'agent réducteur, ici de l'AdBlue©. Il peut être rempli par un utilisateur du véhicule ou par un garagiste.

La ligne d'échappement 3 comprend un ensemble de tuyaux reliant le moteur à une sortie de pot d'échappement par laquelle les gaz d'échappement traités sont destinés à être évacués vers l'extérieur du véhicule.

Par convention, le terme « aval » désigne le côté vers lequel les gaz d'échappement s'écoulent et le terme « amont » le côté en provenance duquel les gaz d'échappement s'écoulent.

Dans l'exemple particulier décrit ici, la ligne d'échappement 3 comprend :

- un premier tuyau 30 de liaison entre la turbine 22 et le dispositif de traitement 4 ;
- le dispositif de traitement 4 ;
- un deuxième tuyau 31 de liaison entre le dispositif de traitement 4 et le dispositif SCR 5;
- le dispositif SCR 5 ;
- un tuyau d'échappement 32.

Comme représenté sur la figure 1, le nez de l'injecteur 2 débouche dans le deuxième tuyau 31, en amont du dispositif SCR 5.

Le moteur et le pot d'échappement (non représentés) sont respectivement situés en amont et en aval de cette ligne d'échappement 3.

La ligne d'échappement 3 est en outre équipée d'un tuyau 33 de dérivation des gaz d'échappement du moteur, dit tuyau EGR 33 (de l'acronyme anglais : Exhaust Gas Recycling). De manière connue, ce tuyau EGR 33 permet de prélever une partie des gaz d'échappement sur la ligne d'échappement 3 du moteur, en un point de jonction 34 situé sur le deuxième tuyau de liaison 31, et de les recycler à l'admission du moteur, plus précisément à l'entrée du compresseur 21. La proportion de gaz d'échappement ainsi recyclés à l'admission peut être dosée par une vanne 35, dite vanne EGR 35, montée sur le tuyau EGR 33.

De manière connue, le dispositif de traitement 4 comprend par exemple un catalyseur d'oxydation, qui permet de traiter les hydrocarbures imbrûlés (HC, CO) et/ou un filtre à particules qui permet de traiter les particules de suie émises par le moteur.

L'injecteur 2 est ici positionné entre le point de jonction 34 et le dispositif SCR 5. Il est relié au réservoir 1 et agencé pour injecter l'agent réducteur de $NO_x$ dans la ligne d'échappement 3, en amont du dispositif SCR 5, sous la commande du calculateur moteur 7.

La sonde à $NO_x$ 6 est destinée à mesurer la quantité de $NO_x$ présente dans les gaz d'échappement en aval du dispositif SCR 5.

Le calculateur moteur 7 est un système embarqué du véhicule automobile destiné à exécuter différentes fonctions relatives au moteur En particulier, il a pour fonction de contrôler la qualité de l'agent réducteur injecté dans la ligne d'échappement 3. Le calculateur 7 comprend un processeur et un module logiciel destiné au contrôle de la qualité de l'agent réducteur injecté. Le module logiciel comporte des instructions logicielles pour commander l'exécution des étapes du procédé décrit ci-après, lorsqu'il est exécuté par le processeur. Le calculateur 7 a également pour rôle de commander le fonctionnement des différents éléments du système de contrôle de qualité.

Le système de contrôle comprend également un capteur de régime moteur et des moyens de détermination de la charge du moteur, connectés au calculateur 7. Le régime moteur mesuré est exprimé en tour/minute. La charge déterminée est soit un couple moteur exprimé en Nm (Newton mètre), soit une PME (Pression Moyenne Effective) exprimée en bar.

Enfin, le système de contrôle comporte un voyant d'alerte 8, connecté au calculateur 7, destiné à être allumé en cas de détection d'un agent réducteur de mauvaise qualité dans le réservoir 1.

Sur la figure 2, on a représenté un deuxième exemple de réalisation du système de contrôle de qualité. Ce système diffère de celui de la figure 1 par les éléments décrits ci-après.

Ici, le dispositif SCR 5 est implanté juste derrière le dispositif de traitement 4, en amont de celui-ci. En d'autres termes, il n'est pas séparé du dispositif 4 par un deuxième tuyau de liaison 31 comme c'est le cas représenté sur la figure 1.

Le nez de l'injecteur 2 débouche directement dans le dispositif SCR 5. En d'autres termes, en fonctionnement, l'agent réducteur est injecté dans le dispositif SCR 5 et non pas en amont de celui-ci dans le deuxième tuyau de liaison 31 de la figure 1.

La sonde à $NO_x$ 6 est positionnée sur le tuyau d'échappement 32, c'est-à-dire en aval du dispositif SCR 5, en amont du point de jonction 34 qui est également situé sur le tuyau d'échappement 32.

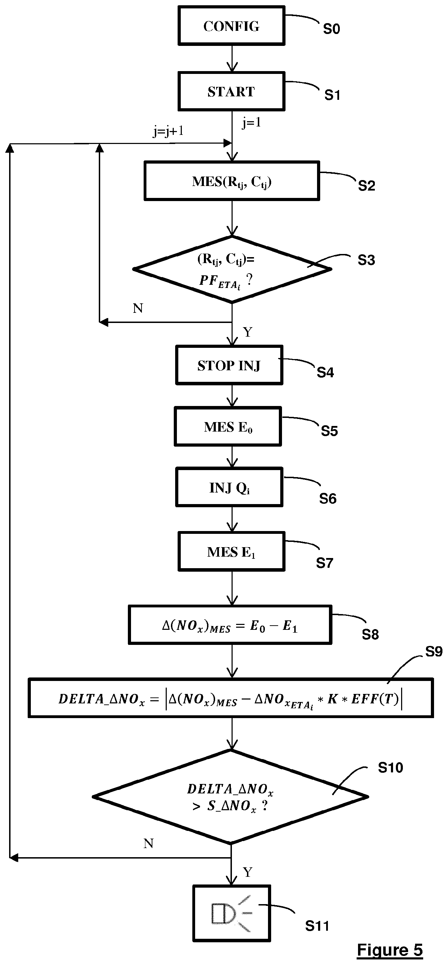

On va maintenant décrire, en référence à la figure 5, le procédé de contrôle de la qualité d'un agent réducteur injecté dans la ligne d'échappement d'un véhicule automobile, selon un mode de réalisation particulier de l'invention. Le procédé est ici mis en oeuvre par le système de la figure 1. Toutefois, une mise en oeuvre du procédé par le système de la figure 2 serait analogue.

Dans le mode de réalisation particulier décrit ici, l'agent réducteur est un agent de réduction catalytique sélective contenant de l'urée, par exemple de l'AdBlue© et destiné à transformer les $NO_x$ en azote $N_2$ et en eau.

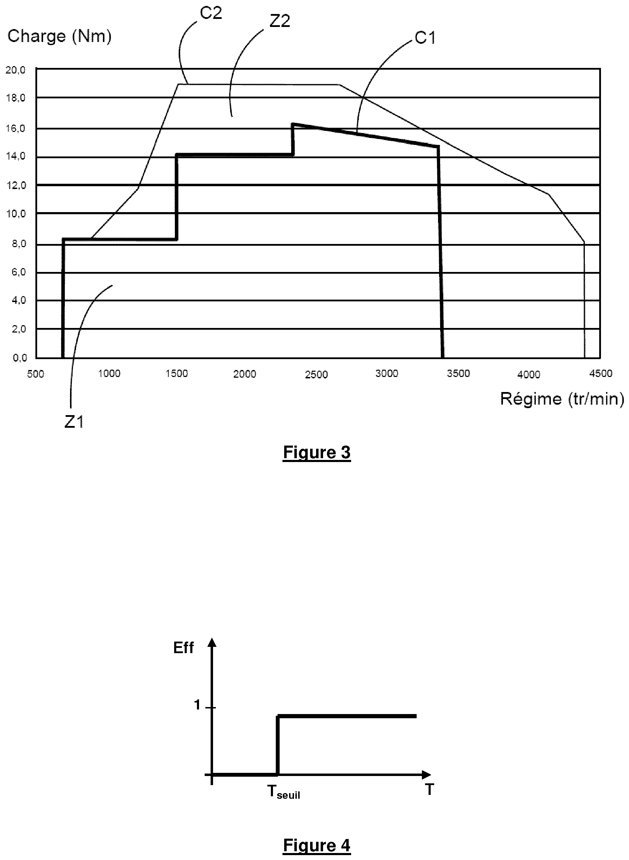

Sur la figure 3, on a représenté, dans un espace à deux dimensions muni d'un repère comportant en ordonnées la charge moteur et en abscisses le régime moteur :

- une première courbe C1 de fonctionnement réglementé;
- une deuxième courbe C2 de fonctionnement maximal.

On note « Z1 » la zone intérieure délimitée par la courbe C1 et l'axe des abscisses et « Z2 » la zone comprise entre la première courbe C1 et la courbe C2. La zone Z1 correspond à une zone réglementée, dans laquelle le fonctionnement du véhicule est contraint par des réglementations anti-pollution, notamment de rejet de $NO_x$. La zone Z2 est une zone non réglementée.

Chaque point contenu dans l'une des zones Z1 et Z2 correspond à un point de fonctionnement du moteur du véhicule, défini par un régime moteur et une charge moteur.

Lors d'une étape préalable S0 de configuration, on effectue une série de mesures étalon de variations de $NO_x$ évacués en sortie de ligne d'échappement 3, en réponse à l'injection d'une quantité déterminée d'agent réducteur dans la ligne d'échappement du véhicule automobile. Chaque mesure étalon est indexée par l'indice i, avec i= 1, 2, ..., N, N étant le nombre total de mesures étalon réalisées. On note $\Delta(NO_x)_{ETA_i}$ la valeur étalon mesurée lors de la mesure d'indice i et $Q_i$ une quantité test d'agent réducteur injectée pour réaliser la mesure d'indice i. Les différentes mesures d'indices respectifs i sont réalisées pour un ensemble de points de fonctionnement de référence, notés $PF_{ETA_i}$ du véhicule automobile. Ces mesures étalon peuvent être réalisées sur un véhicule de test. La quantité test $Q_i$ est ici la même pour toutes les mesures réalisées, autrement dit quel que soit le point de fonctionnement. En variante, la quantité test $Q_i$ pourrait varier en fonction du point de fonctionnement. Les points de fonctionnement de référence $PF_{ETA_i}$ sont ici choisis dans la zone Z2, non soumise à des réglementations antipollution. On obtient ainsi, pour chaque point de fonctionnement de référence $PF_{ETA_i}$ une quantité test d'agent réducteur injectée $Q_i$ et une valeur étalon mesurée correspondante de variation $\Delta(NO_x)_{ETA_i}$ de $NO_x$ émis ou évacués en sortie de ligne d'échappement. La variation ainsi mesurée est en fait une réduction de $NO_x$ évacués. L'ensemble des triplets $(PF_{ETA_i}, Q_i, \Delta(NO_x)_{ETA_i})$ forment une cartographie étalon, ou de référence, enregistrée en mémoire dans le calculateur moteur 7 (ou en variante dans une mémoire externe à laquelle le calculateur 7 a accès). La mémorisation de cette cartographie peut être réalisée en usine, durant la conception du véhicule. Elle peut également être enregistrée dans le calculateur 7, ou dans une mémoire connectée au calculateur 7, après mise en service du véhicule, par exemple lors d'une mise à jour de la cartographie.

Lors d'une première étape S1, le moteur du véhicule est démarré.

Lors d'une deuxième étape S2, le capteur de régime et les moyens de détermination de la charge moteur, déterminent, à un instant $t_j$, avec j valant initialement 1, le nombre de tours par minute du moteur, représentant le régime moteur, et la PME ou le couple du moteur, représentant la charge moteur. Le couple de valeurs régime / charge déterminé à l'instant $t_j$ est transmis au calculateur 7. La deuxième étape S2 est suivie d'une troisième étape de test S3.

Lors de l'étape de test S3, le calculateur 7 détecte si le couple de valeurs régime / charge déterminé à l'instant $t_j$ correspond à un point de fonctionnement de référence $PF_{ETA_i}$ préenregistré.

Si le test S3 est négatif, le procédé revient à la deuxième étape S2, l'indice j étant incrémenté de 1, et de nouvelles valeurs de régime moteur et de charge moteur sont déterminées à l'instant $t_{j+1}$.

Si le test S3 est positif, autrement dit si le couple régime / charge moteur mesuré correspond à un point de fonctionnement de référence $PF_{ETA_i}$ préenregistré dans le calculateur 7, les étapes S4 et suivantes sont réalisées.

Lors d'une quatrième étape S4, sur commande du calculateur 7, l'injection d'agent réducteur du réservoir 1 est momentanément arrêtée pendant une durée prédéterminée. L'arrêt momentané d'injection d'agent réducteur permet ensuite de mesurer la quantité $E_0$ de $NO_x$ évacuée par la ligne d'échappement 3 sans réduction par cet agent.

Puis, lors d'une cinquième étape S5, la quantité $E_0$ de $NO_x$ évacuée en fin de ligne d'échappement 3, suite à l'arrêt d'injection d'agent réducteur, est mesurée à l'aide de la sonde 6. La valeur mesurée $E_0$ est transmise au calculateur 7.

Le procédé passe ensuite à une sixième étape S6 lors de laquelle, sur commande du calculateur 7, l'injecteur 2 injecte dans la ligne d'échappement 3, en amont du dispositif SCR 5, une quantité prédéterminée Qi d'agent réducteur. La quantité d'agent Qi injectée est la quantité préenregistrée en mémoire, correspondant au point de fonctionnement de référence $PF_{ETA_i}$ détecté lors de la troisième étape S3.

Puis, lors d'une septième étape S7, la sonde 6 mesure la quantité $E_1$ de $NO_x$ évacuée en réponse à l'injection de l'agent réducteur lors de l'étape S6. La valeur mesurée $E_1$ est transmise au calculateur 7.

Lors d'une étape S8, le calculateur 7 mesure la variation de $NO_x$ évacués en réponse à l'injection d'agent réducteur, notée $\Delta(NO_x)_{MES}$, en soustrayant la valeur $E_1$ à la valeur Eo, selon l'équation :

$$\Delta(NO_x)_{MES} = E_0 - E_1$$

On mesure ainsi la diminution de $NO_x$ évacués en réponse à l'injection d'agent réducteur.

Lors des neuvième et dixième étapes S9 et S10, la valeur mesurée $\Delta(NO_x)_{MES}$ de variation de $NO_x$ évacués en réponse à l'injection d'agent réducteur est comparée à une valeur de variation attendue, fonction de la valeur de variation étalon $\Delta(NO_x)_{ETA_i}$ correspondant au point de fonctionnement de référence $PF_{ETA_i}$ détecté lors de la troisième étape S3, le calculateur 7 calcule la formule suivante :

$$DELTA\_\Delta NO_x = \left| \Delta(NO_x)_{MES} - \Delta NO_{x_{ETA_i}} * K * EFF(T) \right|$$

où

- K est un facteur correctif de vieillissement du dispositif SCR 5. Ce facteur K est une valeur inférieure ou égale à 1 et est une fonction linéaire du kilométrage du véhicule ou de l'intégrale des tours moteur depuis l'état neuf ;
- EFF(T) est un coefficient d'efficacité du dispositif SCR 5 en fonction de la température de fonctionnement. La figure 4 représente une courbe de l'efficacité EFF (représentée en ordonnées) en fonction de la température de fonctionnement T (représentée en abscisses). Comme cela apparaît sur cette figure 4, le coefficient d'efficacité EFF(T) est nul lorsque la température de fonctionnement T est inférieure à une valeur seuil $T_{seuil}$, et vaut 1 lorsque la température de fonctionnement est supérieure à la valeur seuil $T_{seuil}$ ;
- $\Delta NO_{x_{ETA_i}} * K * EFF(T)$ - c'est-à-dire la valeur de variation de $NO_x$ étalon, corrigée par le facteur de vieillissement K et par le coefficient d'efficacité EFF(T) - correspond à la valeur de variation attendue.

Ainsi, le calculateur 7 soustrait la valeur de variation de $NO_x$ attendue (c'est-à-dire la valeur étalon corrigée par le facteur de vieillissement et par le coefficient d'efficacité), soit $\Delta NO_{x_{ETA_i}} * K * EFF(T)$, à la valeur de variation de $NO_x$ mesurée, soit $\Delta(NO_x)_{MES}$, et détermine la valeur absolue du résultat de cette soustraction. On note $DELTA\_\Delta NO_x$ le résultat obtenu (en valeur absolue) correspondant à une différence entre les variations de $NO_x$ mesurée et attendue.

On pourrait toutefois envisager de calculer une simple soustraction entre la valeur $\Delta(NO_x)_{MES}$ de variation de $NO_x$ mesurée et la valeur $\Delta NO_{x_{ETA_i}}$ de variation de $NO_x$ étalon, la valeur de variation attendue étant dans ce cas égale à la valeur étalon.

Lors de la dixième étape de test S10, on compare le résultat obtenu à l'étape S9, soit $DELTA\_\Delta NO_x$, à un seuil de différence prédéfini, noté $S\_\Delta NO_x$.

Si la différence $DELTA\_\Delta NO_x$ entre variation mesurée et variation étalon est inférieure au seuil $S\_\Delta NO_x$, alors le calculateur 7 détecte que la qualité de l'agent réducteur est bonne et le procédé revient à la deuxième étape S2. Le voyant d'alerte 8 n'est pas allumé. Le procédé retourne alors à la deuxième étape S2.

Si la différence $DELTA\_\Delta NO_x$ entre variation mesurée et variation étalon est supérieure au seuil $S\_\Delta NO_x$, alors le calculateur 7 détecte que la qualité de l'agent réducteur est mauvaise et, lors d'une onzième étape S11, commande l'allumage du voyant d'alerte 8.

Ainsi, le procédé compare la valeur $\Delta(NO_x)_{MES}$ de variation de $NO_x$ mesurée et la valeur de variation de $NO_x$

étalon, corrigée par le facteur de vieillissement et par le coefficient d'efficacité. Cette valeur de variation étalon corrigée correspond à une valeur de variation attendue.

Dans la description qui précède, on injecte une quantité prédéterminée d'agent réducteur sur détection d'un point de fonctionnement située dans la zone Z2. En variante, on pourrait injecter une quantité déterminé, dite « supplémentaire », d'agent réducteur en un point de fonctionnement du moteur pour lequel une quantité d'agent réducteur prédéfinie, dite « de base », est déjà injectée. Dans ce cas, on comparerait la variation de $NO_x$ en sortie du dispositif SCR 5 due à ce surplus d'agent réducteur à une variation étalon de $NO_x$ préenregistrée (préalablement mesurée après injection de la quantité de base d'agent réducteur).

## Revendications

1. Procédé de contrôle de la qualité d'un agent de réduction catalytique sélective d'oxydes d'azote, injecté dans une ligne d'échappement (3) d'un véhicule automobile, comprenant les étapes suivantes :

   - injection (S6) d'une quantité déterminée de l'agent de réduction dans la ligne d'échappement (3) ;
   - mesure (S7-S8) d'une variation de la quantité d'oxydes d'azote évacuée en réponse à l'injection ;
   - comparaison de la variation mesurée et d'une variation attendue (S9-S10) ;

   **caractérisé en ce qu'**il est prévu, durant le fonctionnement du véhicule automobile, une étape (S3) de détection d'un point de fonctionnement prédéfini du véhicule automobile parmi un ensemble de points de fonctionnement préenregistrés et associés chacun en mémoire à une valeur de variation étalon d'oxydes d'azote en réponse à une injection d'une quantité déterminée d'agent de réduction, une valeur de variation attendue étant déterminée à partir de la valeur de variation étalon associée au point de fonctionnement détecté, **en ce que** ladite étape (S6) d'injection d'une quantité déterminée de l'agent de réduction est déclenchée sur détection (S2-S3) du point de fonctionnement prédéfini du véhicule automobile et **en ce que** ledit procédé comprend une étape de soustraction de la valeur de variation attendue à la valeur de variation mesurée, une étape de comparaison du résultat de la soustraction, en valeur absolue, à un seuil de différence prédéfini et on détecte que la qualité de l'agent de réduction est bonne si ledit résultat de la soustraction est inférieur au seuil ou mauvaise si ledit résultat de la soustraction est supérieur au seuil.

2. Procédé selon la revendication 1, **caractérisé en ce que** ledit point de fonctionnement appartient à une zone de fonctionnement du véhicule automobile dépourvue de contraintes réglementaires.

3. Procédé selon l'une des revendications 1 et 2, **caractérisé en ce que** l'étape (S6) d'injection d'une quantité déterminée de l'agent de réduction est précédée d'une étape (S4) d'arrêt de l'injection de l'agent de réduction et d'une étape (S5) de mesure de la quantité d'oxydes d'azote évacuée en réponse à l'arrêt d'injection de l'agent de réduction.

4. Procédé selon l'une des revendications 1 à 3, **caractérisé en ce qu'**on détermine (S9) la variation attendue en corrigeant la variation étalon préenregistrée par un facteur de vieillissement.

5. Procédé selon l'une des revendications 1 à 4, **caractérisé en ce qu'**on détermine (S9) la variation attendue en corrigeant la variation étalon préenregistrée par un coefficient d'efficacité fonction de la température de fonctionnement.

6. Système de contrôle de la qualité d'un agent de réduction catalytique d'oxydes d'azote, injecté dans une ligne d'échappement d'un véhicule automobile, comprenant :

   - un dispositif (2) d'injection de l'agent de réduction dans la ligne d'échappement ;
   - un dispositif (6) de mesure d'une quantité d'oxydes d'azote évacuée en aval d'une réduction catalytique ;
   - un module de commande (7) adapté pour commander une injection d'une quantité déterminée de l'agent de réduction, calculer une variation de la quantité d'oxydes d'azote évacuée en aval de la réduction catalytique, en réponse à l'injection, à partir de valeurs mesurées, et comparer la variation mesurée et une variation attendue préenregistrée ;

   **caractérisé en ce que** le module de commande est adapté pour, durant le fonctionnement du véhicule automobile, détecter un point de fonctionnement prédéfini du véhicule automobile parmi un ensemble de points de fonctionnement préenregistrés et associés chacun en mémoire à une valeur de variation étalon d'oxydes d'azote en réponse à une injection d'une quantité déterminée d'agent de réduction, pour déterminer une valeur de variation attendue à partir de la valeur de variation étalon associée au point de fonctionnement détecté, pour déclencher une injection d'une quantité d'agent de réduction dans la ligne d'échappement sur détection (S2-S3) du point de fonctionnement prédéfini du véhicule automobile et pour soustraire de la valeur de variation attendue à la valeur de variation mesurée, pour comparer le résultat de la soustraction, en valeur absolue, à un seuil de différence prédéfini et pour détecter que la qualité de l'agent de réduction est bonne si ledit résultat de la soustraction est inférieur au seuil ou mauvaise si ledit résultat de la soustraction est supérieur au seuil.

7.  Module logiciel pour un système de contrôle de la qualité d'un agent de réduction catalytique d'oxydes d'azote, injecté dans une ligne d'échappement d'un véhicule automobile, comprenant des instructions logicielles pour :

- durant le fonctionnement du véhicule automobile, détecter un point de fonctionnement prédéfini du véhicule automobile parmi un ensemble de points de fonctionnement préenregistrés et associés chacun en mémoire à une valeur de variation étalon d'oxydes d'azote en réponse à une injection d'une quantité déterminée d'agent de réduction,
- déterminer une valeur de variation attendue à partir de valeur de la variation étalon associée au point de fonctionnement détecté,
- commander une injection d'une quantité déterminée de l'agent de réduction dans la ligne d'échappement sur détection du point de fonctionnement prédéfini du véhicule automobile
- calculer une valeur de variation mesurée de la quantité d'oxydes d'azote évacuée en aval d'une réduction catalytique, en réponse à l'injection, à partir de valeurs mesurées,-et
- soustraire de la valeur de variation attendue à la valeur de variation mesurée,
- comparer le résultat de la soustraction, en valeur absolue, à un seuil de différence prédéfini, et
- détecter que la qualité de l'agent de réduction est bonne si ledit résultat de la soustraction est inférieur au seuil ou mauvaise si ledit résultat de la soustraction est supérieur au seuil,

lorsque ledit module logiciel est exécuté par un processeur.

## Patentansprüche

1.  Verfahren zum Steuern der Qualität eines selektiven katalytischen Stickoxid-Reduktionsmittels, das in eine Abgasleitung (3) eines Kraftfahrzeugs eingeleitet wird, das die folgenden Schritte umfasst:

- Einleiten (S6) einer bestimmten Menge des Reduktionsmittels in die Abgasleitung (3);
- Messen (S7-S8) einer Veränderung in Reaktion auf das Einleiten der ausgelassenen Stickoxidmenge;
- Vergleichen der gemessenen Veränderung mit einer erwarteten Veränderung (S9-S10);

dadurch gekennzeichnet, dass während des Betriebs des Kraftfahrzeugs ein Schritt (S3) des Detektierens eines im Voraus definierten Betriebspunkts des Kraftfahrzeugs unter einer Gesamtheit von im Voraus registrierten Betriebspunkten, die in einem Speicher jeweils einem Stickoxid-Standardveränderungswert zugeordnet sind, in Reaktion auf das Einleiten einer bestimmten Menge eines Reduktionsmittels vorgesehen ist, wobei ein erwarteter Veränderungswert anhand des Standardveränderungswerts, der dem detektierten Betriebspunkt zugeordnet ist, bestimmt wird, dass der Schritt (S6) des Einleitens einer bestimmten Menge des Reduktionsmittels bei einer Detektion (S2-S3) des im Voraus definierten Betriebspunkts des Kraftfahrzeugs ausgelöst wird und dass das Verfahren einen Schritt des Subtrahierens des erwarteten Veränderungswertes von dem gemessenen Veränderungswert, einen Schritt des Vergleichens des Ergebnisses der Subtraktion dem Absolutwert nach mit einem im Voraus definierten Differenzschwellenwert und des Detektierens, dass die Menge des Reduktionsmittels in Ordnung ist, falls das Ergebnis der Subtraktion kleiner als der Schwellenwert ist, oder nicht in Ordnung ist, falls das Ergebnis der Subtraktion größer als der Schwellenwert ist, umfasst.

2.  Verfahren nach Anspruch 1, dadurch gekennzeichnet, dass der Betriebspunkt zu einem Betriebsbereich des Kraftfahrzeugs gehört, der keinen Reglementierungsbeschränkungen unterliegt.

3.  Verfahren nach einem der Ansprüche 1 und 2, dadurch gekennzeichnet, dass dem Schritt (S6) des Einleitens einer bestimmten Menge des Reduktionsmittels ein Schritt (S4) des Beendens des Einleitens des Reduktionsmittels und ein Schritt (S5) des Messens der Menge an Stickoxiden, die in Reaktion auf das Unterbrechen der Einleitung des Reduktionsmittels abgeführt wird, vorhergehen.

4. Verfahren nach einem der Ansprüche 1 bis 3, **dadurch gekennzeichnet, dass** die erwartete Veränderung durch Korrigieren der im Voraus registrierten Standardveränderung mit einem Alterungsfaktor bestimmt (S9) wird.

5. Verfahren nach einem der Ansprüche 1 bis 4, **dadurch gekennzeichnet, dass** die erwartete Veränderung durch Korrigieren der im Voraus registrierten Standardveränderung mit einem von der Betriebstemperatur abhängigen Wirkungsgradkoeffizienten bestimmt (S9) wird.

6. System zum Steuern der Qualität eines katalytischen Stickoxid-Reduktionsmittels, das in eine Abgasleitung eines Kraftfahrzeugs eingeleitet wird, das Folgendes umfasst:

   - eine Vorrichtung (2) zum Einleiten des Reduktionsmittels in die Abgasleitung;
   - eine Vorrichtung (6) zum Messen einer abgeführten Stickoxidmenge nach einer katalytischen Reduktion;
   - ein Steuermodul (7), das dafür ausgelegt ist, ein Einleiten einer bestimmten Menge des Reduktionsmittels zu steuern, eine Veränderung der Stickoxidmenge, die nach der katalytischen Reduktion in Reaktion auf die Einleitung abgeführt wird, anhand von gemessenen Werten zu berechnen und gemessene Veränderung und eine im Voraus registrierte erwartete Veränderung zu vergleichen;

   **dadurch gekennzeichnet, dass** das Steuermodul dafür ausgelegt ist, während des Betriebs des Kraftfahrzeugs einen im Voraus definierten Betriebspunkt des Kraftfahrzeugs aus einer Gesamtheit vom im Voraus registrierten Betriebspunkten, die in einem Speicher jeweils einem Stickoxid-Standardveränderungswert zugeordnet sind, in Reaktion auf eine Einleitung einer bestimmten Menge des Reduktionsmittels zu detektieren, um einen erwarteten Veränderungswert anhand des Standardveränderungswertes, der dem detektierten Betriebspunkt zugeordnet ist, zu bestimmen, um eine Einleitung einer Menge des Reduktionsmittels in die Abgasleitung bei Detektion (S2-S3) des im Voraus definierten Betriebspunkts des Kraftfahrzeugs auszulösen und um den erwarteten Veränderungswert von dem gemessenen Veränderungswert zu subtrahieren, um das Ergebnis der Subtraktion dem Absolutwert nach mit einem im Voraus definierten Schwellenwert zu vergleichen und um zu detektieren, dass die Menge des Reduktionsmittels in Ordnung ist, falls das Ergebnis der Subtraktion kleiner als der Schwellenwert ist, oder nicht in Ordnung ist, falls das Ergebnis der Subtraktion größer als der Schwellenwert ist.

7. Software-Modul für ein System zum Steuern der Qualität eines katalytischen Stickoxid-Reduktionsmittels, das in eine Abgasleitung eines Kraftfahrzeugs eingeleitet wird, das Software-Befehle enthält zum:

   - Detektieren eines im Voraus definierten Betriebspunkts des Kraftfahrzeugs aus einer Gesamtheit von im Voraus registrierten Betriebspunkten, die jeweils im Speicher einem Stickoxid-Standardveränderungswert zugeordnet sind, in Reaktion auf eine Einleitung einer bestimmten Menge des Reduktionsmittels während des Betriebs des Kraftfahrzeugs,
   - Bestimmen eines erwarteten Veränderungswertes anhand des dem detektierten Betriebspunkt zugeordneten Standardveränderungswertes,
   - Steuern eines Einleitens einer bestimmten Menge des Reduktionsmittels in die Abgasleitung bei Detektion des im Voraus definierten Betriebspunkts des Kraftfahrzeugs,
   - Berechnen eines gemessenen Veränderungswerts der Stickoxidmenge, die nach einer katalytischen Reduktion abgeführt wird, in Reaktion auf das Einleiten anhand gemessener Werte,
   - Subtrahieren des erwarteten Veränderungswerts von dem gemessenen Veränderungswert,
   - Vergleichen des Ergebnisses der Subtraktion dem Absolutwert nach mit einem im Voraus definierten Differenzschwellenwert und
   - Detektieren, dass die Menge des Reduktionsmittels in Ordnung ist, falls das Ergebnis der Subtraktion kleiner als der Schwellenwert ist, oder nicht in Ordnung ist, falls das Ergebnis der Subtraktion größer als der Schwellenwert ist,

   wenn das Software-Modul von einem Prozessor ausgeführt wird.

**Claims**

1. Method for checking the quality of a reducing agent for the selective catalytic reduction of nitrogen oxides, which agent is injected into an exhaust line (3) of a motor vehicle, comprising the following steps:

   - injecting (S6) a determined quantity of the reducing agent into the exhaust line (3);

- measuring (S7 - S8) a variation in the quantity of nitrogen oxides released in response to the injection;
- comparing the measured variation against an expected variation (S9 - S10);

**characterized in that** there is, during operation of the motor vehicle, a step (S3) of detecting a predefined operating point of the motor vehicle from among a collection of pre-recorded operating points each associated in memory with a value for the standard variation in nitrogen oxides in response to an injection of a determined quantity of reducing agent, an expected variation value being determined from the standard variation value associated with the operating point detected, and **in that** said step (S6) of injecting a determined quantity of reducing agent is triggered upon detection (S2 - S3) of the predefined operating point of the motor vehicle and **in that** the said method comprises a step of subtracting the expected variation value from the measured variation value, a step of comparing the result of the subtraction, in terms of absolute value, against a predefined difference threshold and detecting that the quality of the reducing agent is good if the said result of the subtraction is below the threshold or poor if the said result of the subtraction is above the threshold.

2. Method according to Claim 1, **characterized in that** the said operating point belongs to a motor vehicle operating zone that does not have regulatory constraints imposed upon it.

3. Method according to one of Claims 1 and 2, **characterized in that** step (S6) of injecting a determined quantity of the reducing agent is preceded by a step (S4) of stopping the injection of the reducing agent and by a step (S5) of measuring the quantity of nitrogen oxides released in response to the stopping of the injecting of the reducing agent.

4. Method according to one of Claims 1 to 3, **characterized in that** the expected variation is determined (S9) by correcting the pre-recorded standard variation using an ageing factor.

5. Method according to one of Claims 1 to 4, **characterized in that** the expected variation is determined (S9) by correcting the pre-recorded standard variation using an effectiveness co-efficient dependent on the operating temperature.

6. System for checking the quality of a reducing agent for the catalytic reduction of nitrogen oxides, injected into an exhaust line of a motor vehicle, comprising:

    - an injection device (2) for injecting the reducing agent into the exhaust line;
    - a measurement device (6) for measuring a quantity of nitrogen oxides released downstream of a catalytic reduction;
    - a control module (7) designed to command an injection of a determined quantity of the reducing agent, to calculate a variation in the quantity of nitrogen oxides released downstream of the catalytic reduction in response to the injection, from measured values and compare the measured variation against a pre-recorded expected variation;

    **characterized in that** the control module is designed to, during operation of the motor vehicle, detect a predefined operating point of the motor vehicle from among a collection of pre-recorded operating points each associated in memory with a value for the standard variation in nitrogen oxides in response to an injection of a determined quantity of reducing agent, in order to determine an expected variation value from the standard variation value associated with the operating point detected so as to trigger injection of a quantity of reducing agent into the exhaust line upon detection (S2 - S3) of the predefined operating point of the motor vehicle and to subtract the expected variation value from the measured variation value to compare the result of the subtraction, in terms of absolute value, against a predefined difference threshold and to detect that the quality of the reducing agent is good if the said result of the subtraction is below the threshold or poor if the said result of the subtraction is above the threshold.

7. Software module for a system for checking the quality of a reducing agent for the catalytic reduction of nitrogen oxides injected into an exhaust line of a motor vehicle, comprising software instructions for:

    - during motor vehicle operation, detecting a predefined operating point of the motor vehicle from among a collection of pre-recorded operating points each associated in memory with a value for the standard variation of nitrogen oxides in response to an injection of a determined quantity of reducing agent,
    - determining an expected variation value from the standard variation value associated with the operating point detected,
    - commanding an injection of a determined quantity of the reducing agent into the exhaust line upon detection of the predefined operating point of the motor vehicle

- calculating a value for the measured variation in the quantity of nitrogen oxides released downstream of a catalytic reduction in response to the injection, from measured values,

- subtracting the expected variation value from the measured variation value,

- comparing the result of the subtraction, in terms of absolute value, against a predefined difference threshold; and

- detecting that the quality of the reducing agent is good if the said result of the subtraction is below the threshold or poor if the said result of the subtraction is above the threshold,

when the said software module is executed by a processor.

**Figure 1**

**Figure 2**

Charge (Nm)

**Figure 3**

**Figure 4**

**Figure 5**

**EP 2 808 510 B1**

**RÉFÉRENCES CITÉES DANS LA DESCRIPTION**

**Documents brevets cités dans la description**

- WO 2007037730 A
- EP 2133524 A
- WO 2008043928 A
- US 2009266058 A